Europäisches Patentamt

European Patent Office

Office européen des brevets

(11) Veröffentlichungsnummer: **0 136 623**
**B1**

# EUROPÄISCHE PATENTSCHRIFT

(45) Veröffentlichungstag der Patentschrift:
**27.01.88**

(21) Anmeldenummer: **84111159.4**

(22) Anmeldetag: **19.09.84**

(51) Int. Cl.⁴: **C 08 F 10/00, C 08 F 4/64**

(54) Verfahren zur Homo- und Misch-polymerisation v. Ethylen.

(30) Priorität: **01.10.83 DE 3335823**

(43) Veröffentlichungstag der Anmeldung:
**10.04.85 Patentblatt 85/15**

(45) Bekanntmachung des Hinweises auf die Patenterteilung:
**27.01.88 Patentblatt 88/4**

(84) Benannte Vertragsstaaten:
**AT BE DE FR GB IT LU NL**

(56) Entgegenhaltungen:
**DE - A - 2 259 516**

**Die Akte enthält technische Angaben, die nach dem Eingang der Anmeldung eingereicht wurden und die nicht in dieser Patentschrift enthalten sind.**

(73) Patentinhaber: **Ruhrchemie Aktiengesellschaft, Bruchstrasse 219, D-4200 Oberhausen 11 (DE)**

(72) Erfinder: **Morguet, Hermann, Dr. Dipl.-Chem., Rosenheimerhof 14, D-4230 Wesel-Obrighoven (DE)**
Erfinder: **Hobes, John, Dr. Dipl.-Chem., Theodor-Storm-Strasse 4, D-4220 Dinslaken (DE)**
Erfinder: **Spaleck, Walter, Dr. Dipl.-Chem., Alexander-Flemming-Strasse 2, D-4290 Bocholt (DE)**
Erfinder: **Payer, Wolfgang, Dr. Dipl.-Chem., Zedernweg 58, D-4230 Wesel 1 (DE)**

(74) Vertreter: **Reichelt, Karl-Heinz, Dr., Ruhrchemie Aktiengesellschaft Abt. PLD Postfach 13 01 60, D-4200 Oberhausen 11 (DE)**

## Beschreibung

Die vorliegende Erfindung betrifft ein Verfahren zur Homo- und Mischpolymerisation von Ethylen unter Drücken von 300 bis 3500 bar in Gegenwart von Ziegler-Katalysatoren.

Es ist bekannt, Ethylen alleine oder zusammen mit anderen Olefinen bei erhöhtem Druck und erhöhter Temperatur nach einem ionischen Mechanismus in Gegenwart von Ziegler-Katalysatoren zu polymerisieren. Diese Katalysatoren bestehen aus Verbindungen des Titans in der Oxidationsstufe drei oder vier und einem Aktivierungsmittel in Form organischer Aluminiumverbindungen.

Es hat sich gezeigt, dass nicht alle Ziegler-Katalysatoren für eine derartige Homo- und Mischpolymerisation von Ethylen geeignet sind. Vielmehr müssen die Katalysatoren bestimmte Anforderungen erfüllen. Sie unterscheiden sich erheblich von denen, die an dieselben Katalysatorsysteme bei Polymerisationsverfahren gestellt werden, die im Bereich niedriger Drücke und Temperaturen arbeiten. So müssen die Katalysatorsysteme bei Temperaturen von 150 °C an noch hochaktiv sein. Die meisten Ziegler-Katalysatoren werden bei diesen Temperaturen jedoch schnell inaktiv oder liefern Polymerisate in schlecher Ausbeute. Für die technische Durchführbarkeit der Hochdruckpolymerisation ist es unerlässlich, dass die Katalysatorsuspension auch mit Hochdruckpumpen gut förderbar ist. Schliesslich sollen die Katalysatorsysteme nicht die Dimerisierung von Ethylen zu 1-Buten bewirken.

Es wurde nämlich gefunden, dass Copolymerisate aus Ethylen und 1-Buten weitaus schlechtere mechanische Eigenschaften aufweisen, als z.B. Copolymerisate aus Ethylen und 1-Hexen, die technisch in grossem Umfang hergestellt werden. Da bei der Hochdruckpolymerisation bei einem Reaktordurchgang nur ein Teil des Ethylens (etwa bis zu 30%) zu Polyethylen umgesetzt wird, muss das nicht umgesetzte Gas in den Reaktor zurückgeführt werden. Setzt man nun Katalysatoren ein, die die Dimerisierung zu 1-Buten fördern, erhält man 1-Buten in hoher Konzentration im Kreislaufgas, so dass z.B. bei Verwendung von 1-Hexen als Comonomeres im Reaktor tatsächlich Ethylen/1-Buten/1-Hexen-Terpolymere erzeugt werden. Auch die Herstellung von Ethylen-Homopolymeren ist unter diesen Umständen selbstverständlich nicht möglich. Eine Lösung des eben aufgezeigten Problems besteht darin, das Buten aus dem Kreislaufgas auszuschleusen. Diese Arbeitsweise ist aber aufwendig und aus wirtschaftlichen Gründen kaum zu realisieren. Des weiteren sollen die Katalysatorsysteme auch bei Polymerisationstemperaturen von 150 °C an noch Produkte mit hohem Molekulargewicht liefern. Schliesslich müssen sie in einfacher Weise aus gut zugänglichen Komponenten hergestellt werden können.

Die bisher für die Hochdruckpolymerisation von Ethylen allein oder mit anderen Olefinen eingesetzten Ziegler-Katalysatoren erfüllen nicht alle die vorstehend aufgeführten Forderungen. Es bestand daher die Aufgabe, Katalysatorsysteme bereit zu stellen, die die Nachteile der bekannten Polymerisationsverfahren vermeiden.

Überraschenderweise wird diese Aufgabe gelöst durch ein Verfahren zur Homo- oder Mischpolymerisation von Ethylen bei Temperaturen von 150 bis 350 °C und Drücken von 300 bis 3500 bar in Gegenwart von Katalysatoren, die aus einer metallorganischen Verbindung eines Metalles der 3. Gruppe des Periodensystems der Elemente (Komponente A) und einer Titanverbindung (Komponente B) bestehen. Es ist dadurch gekennzeichnet, dass die Titanverbindung (Komponente B) durch Umsetzung des Reaktionsproduktes aus einem Magnesiumalkoholat und einem Alkylaluminiumhalogenid mit einem Titansäureester erhalten wird.

Zur Herstellung der Titanverbindung (Komponente B) des nach dem erfindungsgemässen Verfahrens verwendeten Katalysatorsystems wird zunächst ein Magnesiumalkoholat in einem geeigneten Suspenionsmittel aufgeschlämmt. Geeignete Suspensionsmittel sind z.B. höhersiedende Kohlenwasserstoffe wie Methylcyclohexan, Isooctan oder Kohlenwasserstoffschnitte mit einem Siedebereich von 100 bis 180 °C. Zu dieser Suspension gibt man bei −20 bis 100 °C unter Rühren die Lösung eines Alkylaluminiumhalogenids hinzu und lässt ausreichende Zeit, d.h. 10 bis 600 Minuten, nachreagieren. Das feste Reaktionsprodukt wird durch mehrfaches Dekantieren von der nicht umgesetzten Alkylaluminiumverbindung befreit.

Darauf fügt man zu der Suspension der Magnesium-Aluminiumverbindung unter Rühren und Erwärmen auf 40 bis 120 °C den Titansäureester in reiner Form oder als Lösung tropfenweise zu. Nach beendeter Reaktion wird der erhaltene Festkörper mehrfach gewaschen, um nicht umgesetzten Titansäureester zu entfernen.

Das molare Verhältnis vom Alkylaluminiumhalogenid zu Magnesiumalkoholat kann zwischen 0,5 und 5 betragen. Das molare Verhältnis von Titansäureester zu dem eingesetzten Magnesiumalkoholat kann zwischen 0,01 und 10 liegen.

Als Magnesiumalkoholate kommen insbesondere Verbindungen in Betracht, die sich von niedermolekularen aliphatischen Alkoholen ableiten, d.h. Alkoholen mit 1 bis 8 Kohlenstoffatomen. Beispiele für derartige Alkohole sind Ethanol, Isopropanol, n-Butanol und iso-Butanol. Bevorzugt eingesetzt wird Magnesiumäthylat.

Als Alkylaluminiumhalogenide können Monoalkylaluminiumdihalogenide, Dialkylaluminiummonohalogenide und Gemisch dieser beiden Verbindungsklassen verwendet werden. Die in den Alkylaluminiumhalogeniden enthaltenen Alkylreste können gleich oder verschieden sein und weisen jeweils 1 bis 12 und vorzugsweise 1 bis 4 Kohlenstoffatome auf. Beispiele für derartige Verbindungen sind Diethylaluminiummonochlorid, Ethylaluminiumdichlorid, Ethylaluminiumsesquichlorid und Isobutylaluminiumdichlorid.

Die Titansäureester entsprechen der allgemeinen Formel $Ti(OR)_4$, wobei R für Alkylreste mit 1 bis 20 und für Arylreste mit 6 bis 20 Kohlenstoffatomen steht. Die Alkyl- bzw. Arylreste im Titansäureester können gleich sein. Es ist aber auch möglich, gemischte Titansäureester einzusetzen, d.h. Verbindungen, die im gleichen Molekül verschiedene Alkyl- oder Arylreste enthalten. Auch der Einsatz von Polytitanaten wie Butylpolytitanat $n-C_4H_9-O-[Ti(O-nC_4H_9)_2O]_xn-C_4H_9$ ist möglich. Beispiele für besonders geeignete Titansäureester sind $Ti(OC_2H_5)_4$, $Ti(Oiso-C_3H_7)_4$, $Ti(On-C_4H_9)_4$.

Das eigentliche Katalysatorsystem entsteht dadurch, dass man die Titankomponente, deren Herstellung vorstehend beschrieben ist, mit einer Aluminiumalkylverbindung umsetzt. Es ist auch möglich, die Titankomponente in bekannter Weise mit einer Aluminiumalkylverbindung vorzuaktivieren und mit einem $\alpha$-Olefin z.B. 1-Hexen vorzupolymerisieren. Auf diese Weise kann die Pumpbarkeit der Katalysatorsuspension verbessert werden.

Das Atomverhältnis von Titan in der Katalysatorkomponente B zu Aluminium in der Katalysatorkomponente A beträgt 1:0,1 bis 1:200.

Das Katalysatorsystem wird als Mischung oder in Form seiner Komponenten als Suspension bzw. Lösung in höhersiedenden Kohlenwasserstoffen über Hochdruckpumpen dem Reaktor in solchen Mengen zugeführt, dass die gewünschte Reaktionstemperatur erreicht wird.

Die Polymerisation von Ethylen allein oder mit anderen Olefinen kann sowohl in Autoklaven als auch in Röhrenreaktoren durchgeführt werden. Der Polymerisationsdruck liegt zwischen 300 und 3500 bar, die Polymerisationstemperatur zwischen 150 und 350 °C. Zur Steuerung des Molekulargewichts führt man dem Reaktor 0,05 bis 5 Vol.-% Wasserstoff, bezogen auf eingesetztes Ethylen, zu. Es können aber auch wesentlich höhere Konzentrationen an Wasserstoff verwendet werden. Dadurch werden Polymerisate mit vergleichsweise niedrigerem Molekulargewicht (Wachse) erhalten. Als Comonomere, die zusammen mit dem Ethylen polymerisiert werden, kommen niedere Olefine, wie 1-Propen, 1-Buten, 1-Hexen oder 1-Octen in Betracht. Sie werden über weitere Hochdruckpumpen in Mengen zwischen 0,5 und 75 Gew.-%, bezogen auf die Summe aus Ethlyen und Comonomer, dem Reaktionsgemisch zugeführt. Das Polymerisat fällt als Schmelze an und wird über Abscheidesysteme, in denen die Trennung zwischen gasförmigen und flüssigen Anteilen erfolgt, einem Extruder zugeführt und granuliert.

In den folgenden Beispielen wird die Erfindung näher erläutert, ohne sie in ihrem Schutzumfang zu begrenzen.

Beispiel 1
a) Darstellung der Titankomponente:
In einem 4 l-Dreihalskolben werden unter $N_2$-Atmosphäre 192 g Mg$(OC_2H_5)_2$ (1680 mmol) in 1600 ml Benzin vorgelegt. Bei 80 °C tropft man unter Rühren innerhalb von 30 min 1370 ml einer 1,3 molaren Lösung (1781 mmol) von Ethylaluminiumdichlorid in Benzin hinzu und lässt unter Rühren 5 h bei 80 °C nachreagieren.

Durch Abheben der überstehenden flüssigen Phase und Wiederauffüllen mit frischem Benzin wird der Festkörper bei Zimmertemperatur gewaschen, bis die überstehende Phase kein Aluminiumalkyl mehr enthält.

1000 ml dieser Feststoffsuspension (498 mmol Mg) werden in einem 4 l-Dreihalskolben unter $N_2$-Atmosphäre vorgelegt. Bei 80 °C tropft man unter Rühren innerhalb von 4 h eine Lösung von 24,4 g Ti $(OC_2H_5)_4$ (100 mmol) in 80 ml Benzin zu und lässt 1 h unter Rühren bei 80 °C nachreagieren. Der Reststoff wird wie oben beschrieben gewaschen, bis die überstehende Phase kein Titan mehr enthält. Die Suspension enthält 70,7 mmol Ti/l und 444 mmol Mg/l.

Die Suspension wird nun bei 65 °C unter Rühren innerhalb von 5 min mit 113 ml (140 mmol) einer 1,25 molaren Lösung von Diethylaluminiumchlorid in Benzin versetzt (Voraktivierung), danach wird innerhalb von 15 min 88,3 ml 1-Hexen (710 mmol) in 300 ml Benzin zugetropft und 2 h bei 65 °C nachgerührt (Vorpolymerisation).

b) Polymerisation
Zur Bestimmung der Polymerisationsaktivität wird bei etwa 180 °C in Lösung polymerisiert.

In einem 3 l-Stahlautoklaven mit Magnetrührer, Temperiermantel und Bodenventil werden 2 l Benzin und 10,6 ml der gemäss a) erhaltenen Suspension (0,5 mmol Ti) vorgelegt.

Man heizt rasch auf 180 °C auf, pumpt 16 ml einer 1,25 molaren Lösung von Diethylaluminiumchlorid (20 mmol) in Benzin zu und leitet anschliessend Ethylen bei 5 bar Vordruck ein.

Nach 35 min wird die Ethylenzugabe abgestellt, das Produkt aufgearbeitet und getrocknet. Man erhält 240 g Polyethylen.

Beispiel 2 (Vergleich)
Im folgenden Beispiel wird die Polymerisation mit einem Katalysator durchgeführt, dessen Titankomponente nicht nach dem erfindungsgemässen Verfahren hergestellt wurde.

a) Darstellung der Titankomponente
In einem 4 l-Dreihalskolben tropft man unter Rühren zu 82 g Mg $(OC_2H_5)_2$ (716 mmol) in 800 ml Benzin innerhalb von 30 min 826 ml einer 1,3 molaren Lösung von Ethylaluminiumdichlorid (1074 mmol) in Benzin, wobei in der Reaktionsmischung eine Temperatur von 85 °C aufrecht erhalten wird. Man lässt unter Rühren 2 h lang bei 85 °C nachreagieren. Der entstandene Festkörper wird wie in Beispiel 1 a) gewaschen.

1520 ml dieser Feststoffsuspension (599 mmol Mg) werden in einem 4 l-Dreihalskolben unter $N_2$-Atmosphäre vorgelegt. Bei 80 °C tropft man unter Rühren innerhalb von 4 h eine Lösung von 32,9 ml TiCl$_4$ (299 mmol) in 100 ml Benzin zu und lässt 4 h unter Rühren bei 80 °C nachreagieren. Der Feststoff wird wie in Beispiel 1 beschrieben gewaschen. Die Suspension enthält 80,0 mmol Ti/l und 390,4 mmol Mg/l.

Sie wird wie in Beispiel 1 a) voraktiviert und vorpolymerisiert.

b) Polymerisation

Zur Bestimmung der Polymerisationsaktivität wird entsprechend Beispiel 1 b) bei etwa 180 °C in Lösung polymerisiert.

In einem 3 l-Stahlautoklaven mit Magnetrührer, Temperiermantel und Bodenventil werden 2 l Benzin und 6,25 ml der gemäss Beispiel 2 a) erhaltenen Suspension (0,5 mmol Ti) vorgelegt.

Man heizt rasch auf 180 °C auf, pumpt 16 ml einer 1,25 molaren Lösung von Diethylaluminiumchlorid (20 mmol) in Benzin zu und leitet anschliessend Ethylen bei 5 bar Vordruck ein. Nach 35 min wird die Ethylenzugabe abgestellt, das Produkt aufgearbeitet und getrocknet. Man erhält 72 g Polyethylen.

Der Katalysator nach der Erfindung ist also bei einer Polymerisationstemperatur von 180 °C mehr als dreimal so aktiv wie der Vergleichskatalysator.

Beispiel 3

Ethylen wird in einem 0,5 l-Hochdruckrührautoklaven mit dem erfindungsgemässen Katalysatorsystem des Beispiels 1 kontinuierlich polymerisiert. Bei einem Reaktionsdruck von 1500 bar müssen zur Aufrechterhaltung einer Polymerisationstemperatur von 230 °C 0,125 mmol Ti/h und 3 mmol Al/h eingesetzt werden. Der Umsatz beträgt 12,4% bezogen auf Ethylen, der Katalysatorverbrauch 0,13 mmol Ti/kg Polyethylen. Die Molekulargewichtsregelung erfolgt mit 0,7 Vol.-% Wasserstoff (bezogen auf das Einsatzgas). Die Polyethylenschmelze wird kontinuierlich über ein Abscheidersystem gedrückt und granuliert. Im Abgas sind 0,45 Gew.-% n-Buten enthalten. Der Schmelzindex (MFI 190/2,16) des Granulats beträgt 1,38 g/10 min, der Kristallitschmelzpunkt 129 °C, die Dichte 0,942 g/10 min und die Schlagzugzähigkeit 1450 mJ/mm².

Beispiel 4

Wie in Beispiel 3 wird Ethylen in einem Hochdruckrührautoklaven mit einem Fassungsvermögen von 0,5 l unter Verwendung des zum Stand der Technik gehörenden (statt des erfindungsgemässen) Katalysatorsystems $TiCl_3 \cdot 1/3\ AlCl_3$ und Tri-n-octylaluminium als Aktivator polymerisiert. Um bei einem Druck von 1500 bar eine Reaktionstemperatur von 230 °C zu erhalten, ist der Einsatz von 0,8 mmol Ti/h und 14 mmol Al/h erforderlich. Der Umsatz beträgt 8,9% bezogen auf Ethylen, der Katalysatorverbrauch 1,5 mmol Ti/kg Polyethylen. Die Molekulargewichtsregelung erfolgt mit 0,9 Vol.-% Wasserstoff (bezogen auf das Einsatzgas). Die Schmelze wird kontinuierlich über ein Abscheidersystem gedrückt und granuliert. Im Abgas sind 11,5 Gew.-% n-Buten enthalten.

Der Schmelzindex (MFI 190/2,16) des Granulats beträgt 1,2 g/10 min, der Kristallitschmelzpunkt 132 °C und die Dichte 0,936 g/cm³. Die Schlagzugzähigkeit liegt bei 1200 mJ/mm².

Beispiel 5

In der Apparatur und unter den Reaktionsbedingungen des Beispiels 3 wird Ethylen mit 25 Gew.-% n-Buten-1 bezogen auf das Ethylen, copolymerisiert. Die Einstellung des Molekulargewichts erfolgt mit 0,5 Vol.-% Wasserstoff, bezogen auf das Ethylen. Auf die Messung des n-Buten-Gehaltes im Abgas wird bei diesem Versuch verzichtet. Der Umsatz betrgät 16,5% bezogen auf das Gemisch der Olefine. Zur Einstellung der Polymerisationstemperatur werden 0,275 mmol Ti/h und 8 mmol Al/h benötigt. Der Katalysatorverbrauch beträgt 0,11 mmol Ti/kg Polyethylen. Der Schmelzindex (MFI 190/2,16) des granulierten Copolymerisats beträgt 1,1 g/10 min, der Kristallitschmelzpunkt 127 °C, die Dichte 0,936 g/cm³ und die Schlagzugzähigkeit 1875 mJ/mm².

Beispiel 6

In der gleichen Apparatur und unter den Reaktionsbedingungen des Beispiels 3 wird Ethylen mit 32% Hexen bezogen auf Ethylen copolymerisiert. Die Einstellung des Molekulargewichts erfolgt mit 0,20 Vol.-% Wasserstoff. Im Abgas sind 0,55 Gew.-% n-Buten enthalten. Der Umsatz beträgt 18,4% bezogen auf das Gemisch der Olefine, entsprechend einem Einsatz von 0,18 mmol Ti/h und von 7,5 mmol Al/h bzw. einem Katalysatorverbrauch von 0,05 mmol Ti/kg Polyethylen.

Der Schmelzindex (MFI 190/2,16) des Ethylen/Hexen-Copolymerisats beträgt 1,22 g/10 min, der Kristallitschmelzpunkt 125 °C, die Dichte 0,934 g/cm³ und die Schlagzugzähigkeit 2250 mJ/mm².

Beispiel 7 (Vergleich)

Mit dem Katalysatorsystem des Beispiels 4 wird bei 1500 bar und 230 °C Ethylen mit 15 Gew.-% Hexen, bezogen auf Ethylen, copolymerisiert. Das Molekulargewicht wird durch Zusatz von 0,5 Vol.-% $H_2$ im Ethylen geregelt, und es werden 1,1 mmol Ti/h, sowie 18,5 mmol Al/h eingesetzt. Der Katalysatorverbrauch beträgt bei einem Umsatz von 11,6% bezogen auf das Olefingemisch, 1,23 mmol Ti/kg Polyethylen. Im Abgas sind 10,5 Gew.-% n-Buten enthalten.

Der Schmelzindex (MFI 190/2,16) des Polymerisats beträgt 0,90 g/10 min, der Kristallitschmelzpunkt 127 °C, die Dichte 0,931 g/cm³ und die Schlagzugzähigkeit 1450 mJ/mm².

**Patentansprüche**

1. Verfahren zur Homo- oder Mischpolymerisation von Ethylen bei Temperaturen von 150 bis 350 °C und Drücken von 300 bis 3500 bar in Gegenwart von Katalysatoren, die aus einer metallorganischen Verbindung eines Metalls der 3. Gruppe des Periodensystems der Elemente (Komponente A) und einer Titanverbindung (Komponente B) bestehen, dadurch gekennzeichnet, dass die Titanverbindung (Komponente B) durch Umsetzung des Reaktionsproduktes aus einem Magnesiumalkoholat einem Alkylaluminiumhalogenid mit einem Titansäureester erhalten wird.

2. Verfahren nach Anspruch 1, dadurch gekennzeichnet, dass sich das Magnesiumalkoholat von aliphatischen Alkoholen mit 1 bis 8 Kohlenstoffatomen ableitet.

3. Verfahren nach Anspruch 1 und 2, dadurch gekennzeichnet, dass die Alkylreste der Alkylaluminiumhalogenide jeweils 1 bis 12, vorzugsweise 1 bis 4 Kohlenstoffatome aufweisen.

4. Verfahren nach Anspruch 1 bis 3, dadurch gekennzeichnet, dass das Magnesiumalkoholat als Suspension in einem Kohlenwasserstoff bei −20 bis 100 °C mit dem Alkylaluminiumhalogenid umgesetzt wird.

5. Verfahren nach Anspruch 1 bis 4, dadurch gekennzeichnet, dass das molare Verhältnis vom Alkylaluminiumhalogenid zu Magnesiumalkoholat 0,5:1 bis 5:1 beträgt.

6. Verfahren nach Anspruch 1 bis 5, dadurch gekennzeichnet, dass der Titansäureester der allgemeinen Formel $Ti(OR)_4$ entspricht, wobei R gleich oder verschieden sein kann und Alkylreste mit 1 bis 30 und Arylreste mit 6 bis 20 Kohlenstoffatomen bedeutet.

7. Verfahren nach Anspruch 1 bis 6, dadurch gekennzeichnet, dass das moalre Verhältnis von Titansäureester zu Magnesiumalkoholat 0,01:1 bis 10:1 beträgt.

8. Verfahren nach Anspruch 1 bis 7, dadurch gekennzeichnet, dass eine Aluminiumverbindung als metallorganische Verbindung eines Metalls der 3. Gruppe eingesetzt wird und dass das Atomverhältnis von Titan in der Katalysatorkomponente B zu Aluminium in der Katalysatorkomponente A 1:0,1 bis 1:200 beträgt.

## Revendications

1. Procédé pour l'homo- ou la copolymérisation de l'éthylène à des températures de 150 à 350 °C et sous des pressions de 300 à 3500 bar en présence de catalyseurs qui consistent en un composé organométallique d'un métal du troisième groupe de la Classification Périodique des Eléments (composant A) et d'un composé de titane (composant B), caractérisé en ce que le composé de titane (composant B) est obtenu par réaction du produit de réaction d'un alcoolate de magnésium et d'un halogénure d'alkylaluminium avec un ester d'acide titanique.

2. Procédé selon la revendication 1, caractérisé en ce que l'alcoolate de magnésium est dérivé d'alcools aliphatiques en $C_1$–$C_8$.

3. Procédé selon les revendications 1 et 2, caractérisé en ce que les restes alkyles des halogénures d'alkylaluminium présentent chaque fois 1 à 12 atomes de carbone, de préférence 1 à 4 atomes de carbone.

4. Procédé selon les revendications 1 à 3, caractérisé en ce que l'alcoolate de magnésium est mis en réaction avec l'halogénure d'alkylaluminium sous forme d'une suspension dans un hydrocarbure à −20–100 °C.

5. Procédé selon les revendications 1 à 4, caractérisé en ce que le rapport molaire de l'halogénure d'alkylaluminium à l'alcoolate de magnésium est de 0,5:1 à 5:1.

6. Procédé selon les revendications 1 à 5, caractérisé en ce que l'ester titanique correspond à la formule générale $Ti(OR)_4$ où les restes R peuvent être identiques ou différents et représentent des restes alkyles en $C_1$–$C_{30}$ et des restes aryles en $C_6$–$C_{20}$.

7. Procédé selon les revendications 1 à 6, caractérisé en ce que le rapport molaire de l'ester titanique à l'alcoolate de magnésium est de 0,01:1 à 10:1.

8. Procédé selon les revendications 1 à 7, caractérisé en ce que l'on utilise un composé d'aluminium comme composé organométallique d'un métal du troisième groupe et en ce que le rapport atomique du titane dans le composant catalytique B à l'aluminium dans le composant catalytique A est de 1:0,1 à 1:200.

## Claims

1. A process for the homo or copolymerisation of ethylene at temperatures of 150 to 350 °C and pressures of 300 to 3500 bar in the presence of catalysts consisting of an organometallic compound of a metal of the 3rd group of the periodic system of the elements (component A) and a titanium compound (component B), characterised in that the titanium compound (component B) is obtained by reacting the reaction product of a magnesium alcoholate and an alkylaluminium halide with a titanic acid ester.

2. A process according to claim 1, characterised in that the magnesium alcoholate is derived from aliphatic alcohols with 1 to 8 carbon atoms.

3. A process according to claims 1 and 2, characterised in that the alkyl groups of the alkylaluminium halide each exhibit 1 to 12, preferably 1 to 4 carbon atoms.

4. A process according to claims 1 to 3, characterised in that the magnesium alcoholate is reacted as a suspension in a hydrocarbon with the alkylaluminium halide at −20° to 100 °C.

5. A process according to claims 1 to 4, characterised in that the molar ratio of alkylaluminium halide to magnesium alcoholate is 0.5:1 to 5:1.

6. A process accroding to claims 1 to 5, characterised in that the titanium acid ester corresponds to the general formula $Ti(OR)_4$, where R can be the same or different and denote alkyl groups with 1 to 30 and alkyl groups with 6 to 20 carbon atoms.

7. A process according to claims 1 to 6, characterised in that the molar ratio of titanium acid ester to magnesium alcoholate is 0.01:1 to 10:1.

8. A process according to claims 1 to 7, characterised in that an aluminium compound is used as the organometallic compound of a metal of the 3rd group and that the atomic ratio of titanium in the catalyst component B to aluminium in the catalyst component A is 1:0.1 to 1:200.